# EUROPÄISCHE PATENTANMELDUNG

(11) **EP 1 925 851 A1**
(43) Veröffentlichungstag der Anmeldung: **28.05.2008**
(21) Anmeldenummer: 07120137.0
(22) Anmeldetag: 07.11.2007
(51) Int. Cl.: F16H 7/08

(54) **Hydraulischer Zugmittelspanner mit integrierter Spannkraftbegrenzung**

(30) Priorität: 21.11.2006 DE 102006054744
(71) Anmelder: Schaeffer KG, 91074 Herzogenaurach (DE)
(72) Erfinder: Kern, Roman, 91301 Forchheim (DE); Kowalski, Marco, 91074 Herzogenaurach (DE)

(57) **Zusammenfassung**

Zugmittelspanner (1), insbesondere nach Art eines hydraulischen Zugmittelspanners für einen Kettentrieb, mit einem Gehäuse (2), das einen Spannkolben (3) axialbeweglich aufnimmt, welcher an einen Spannerhockdruckraum (4) angrenzt, wobei der Spannerhockdruckraum (4) über eine Fluidzufuhröffnung (5) sowie ein Rückschlagventil (6) gespeist ist, wobei der Zugmittelspanner (1) eine Ventilbaugruppe umfasst, welche nach Art eines Druckbegrenzungsventils (7) ausgebildet ist und den sich im Spannerhochdruckraum (4) einstellenden Fluiddruck begrenzt.

## Beschreibung

### Gebiet der Erfindung

Die vorliegende Erfindung betrifft einen Zugmittelspanner, insbesondere nach Art eines hydraulischen Zugmittelspanners für einen Kettentrieb, mit einem Gehäuse, das einen Spannkolben axialbeweglich aufnimmt, welcher an einen Spannerhochdruckraum angrenzt, wobei der Spannerhochdruckraum über eine Fluidzufuhröffnung sowie einem Rückschlagventil gespeist ist. Die Erfindung betrifft insbesondere einen druckölbetriebenen Zugmittelspanner für einen Kettentrieb, welcher bei Brennkraftmaschinen Anwendung findet, um die Drehbewegung einer Kurbelwelle auf wenigstens eine Nockenwelle sowie weitere mittels der Brennkraftmaschine betriebene Aggregate zu übertragen.

Aus der Offenlegungsschrift DE 10 2004 047 450 A1 ist ein gattungsgemäßer hydraulischer Zugmittelspanner bekannt, welcher zum Spannen eines Zugmittels bestimmt ist. Der Aufbau des hierin offenbarten Zugmittelspanners umfasst ein Gehäuse, welches wenigstens teilweise zylinderförmig ausgebildet ist und in dem ein Spannkolben eines zugehörigen Maschinenteils axialbeweglich geführt ist. Der zylinderbildende Teil des Gehäuses und der Spannkolben begrenzen einen mit einem Hydraulikfluid gefüllten Spannerhochdruckraum, wobei bei einer Stellbewegung des Spannkolbens ein Volumenaustausch des Hydraulikfluids zwischen dem Spannerhochdruckraum und einem im Spannkolben ausgebildeten integrierten Vorratsraum über ein stirnseitig im Spannkolben angeordnetes Rückschlagventil erfolgt. Die Passungsmaße des im Gehäuse geführten Spannkolbens sind derart ausgebildet, dass bei einer Verstellung des Kolbens in Richtung des Druckraums Hydraulikfluid über einen sich zwischen dem Kolben und dem Gehäuse einstellenden Leckspalt in den Vorratsraum entweichen kann. Bei einer umgekehrten Stellbewegung des Spannkolbens strömt Hydraulikfluid von dem Vorratsraum über das bodenseitig im Druckraum angeordnete Rückschlagventil in den Druckraum.

Im Betrieb von Zugmittelspannern im Bereich von Brennkraftmaschinen zur Übertragung der Drehbewegung zwischen der Kurbelwelle und der Nockenwelle bzw. externen Aggregaten entsteht das Problem, dass der Zugmittelspanner einer erheblichen dynamischen Belastung ausgesetzt ist. Die dynamische Belastung betrifft eine Schwingungsanregung, welche seitens des Zugmittels in den Spannkolben eingeleitet wird. Zur Dämpfung und Aufrechterhaltung der erforderlichen Spannkraft strömt das hydraulische Fluid über eine Fluidzufuhröffnung innerhalb des Gehäuses durch das Rückschlagventil in den Spannerhochdruckraum. Da über die Fluidzufuhröffnung ein kontinuierlicher Fluiddruck anliegt, kann sich bei einer überlagerten Schwingbewegung im Spannkolben eine Drucküberhöhung im Spannerhochdruckraum ergeben. Der Grund liegt insbesondere im hohen Strömungswiderstand im Leckspalt zwischen dem Spannkolben und dem Gehäuse, so dass der Spannkolben nicht schnell genug in das Gehäuse zurückgeführt werden kann. Somit wandert der Spannkolben im schwingenden Betrieb des Gesamtsystems weiter aus dem Gehäuse heraus, und das Zugmittel wird mit einer übermäßig großen Spannkraft gespannt. Dieser Betriebszustand kann zu einem Versagen des Zugmittels führen. Bei Schwingungsamplituden von beispielsweise 1 mm können sich Spannkräfte von bis zu 2kN bei einer Schwingfrequenz von 400Hz ausbilden. Damit sind die maximal zulässigen Spannkräfte des Zugmittelspanners auf das Zugmittel, wie beispielsweise den Kettentrieb um ein Vielfaches überhöht, so dass es zu einem Versagen des Kettentriebs führen kann, was bekanntermaßen einen erheblichen Schaden der Brennkraftmaschine verursacht.

Es ist daher die Aufgabe der vorliegenden Erfindung, einen Zugmittelspanner der eingangs beschriebenen Art auf eine Weise zu verbessern, eine unzulässige Überhöhung auftretender Spannkräfte durch den Spannkolben auf das Zugmittel zu vermeiden. Insbesondere ist es die Aufgabe der vorliegenden Erfindung, eine Druckbegrenzung im Spannerhochdruckraum auch in einem schwingungsangeregten Betriebszustand des Zugmittelspanners zu schaffen.

Diese Aufgabe wird ausgehend von einem Zugmittelspanner gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass der Zugmittelspanner eine Ventilbaugruppe umfasst, welche nach Art eines Druckbegrenzungsventils ausgebildet ist und den sich im Spannerhochdruckraum einstellenden Fluiddruck begrenzt.

Der durch die Erweiterung eines Zugmittelspanners durch eine Ventilbaugruppe nach Art eines Druckbegrenzungsventils erreichte Vorteil ist die Begrenzung des sich im Spannerhochdruckraum einstellenden Drucks des hydraulischen Fluids. Erreicht der Druck des hydraulischen Fluids im Spannerhochdruckraum einen voreingestellten Grenzwert, so öffnet das Druckbegrenzungsventil, so dass das Hydraulikfluid nicht nur durch den zwischen dem Spannkolben und dem Gehäuse ausgebildeten Leckspalt entweichen kann, sondern dass innerhalb einer kurzen Zeitspanne ein großer Volumenstrom durch das Druckbegrenzungsventil ebenfalls aus dem Spannhochdruckraum entweichen kann.

Gemäß einer besonders vorteilhaften Ausführungsform der Anordnung der Ventilbaugruppe ist vorgesehen, dass das Druckbegrenzungsventil im Spannkolben angeordnet ist. Der Spannkolben bietet auf der dem Spannerhochdruckraum abgewandten Seite einen hinreichenden Einbauraum für ein Druckbegrenzungsventil, wobei die Hochdruckeingangsöffnung des Druckbegrenzungsventils auf einfache Weise mit dem Spannerhochdruckraum verbunden werden kann. Die Verbindung kann beispielsweise als eine Längsbohrung im Spannkolben ausgebildet sein, so dass eine permanente Verbindung des Druckbegrenzungsventils mit dem Spannerhochdruckraum sichergestellt ist.

Vorteilhafterweise umfasst das Druckbegrenzungsventil einen Ventilschieber, der in einem Ventilschieberraum in Richtung einer Ventilschieberlängsachse geführt ist und mittels einer Ventilfeder in eine Schließstellung bringbar ist. Diese Ausführungsform eines Druckbegrenzungsventils entspricht einer üblichen Bauweise eines Schieberventils, wobei zum Überführen des Ventilschiebers in eine Offenstellung der Fluidhochdruck eine endseitig am Ventilschieber ausgebildete Druckfläche beaufschlagt, so dass der Druck des hydraulischen Fluides gegen die Ventilfeder wirkt. Erreicht der Fluiddruck einen Grenzwert, so wird die Ventilfeder derart stark komprimiert, dass eine Abblasöffnung des Druckbegrenzungsventils freigegeben wird. Zur Aufrechterhaltung eines gewünschten Grenzdruckes innerhalb des Spannerhochdruckraums wird sich daher ein entsprechender Durchlassquerschnitt innerhalb des Druckbegrenzungsventils zwischen der Hochdruckeingangsöffnung und der Abblasöffnung einstellen.

Gemäß einer weiteren vorteilhaften Ausführungsform des Druckbegrenzungsventils ist der Spannkolben entlang einer Spannkolbenlängsachse bewegbar, wobei die Ventilschieberlängsachse und die Spannkolbenlängsachse einen Winkel von 60° bis 120°, bevorzugt von 75° bis 105° und besonders bevorzugt von 90° zueinander einschließen. Mittels dieser vorgeschlagenen Anordnung des Ventilschiebers des Druckbegrenzungsventils verläuft die Ventilschieberlängsachse senkrecht zur Schwingungsrichtung des Spannkolbens, so dass das Druckbegrenzungsventil schwingungsunempfindlich innerhalb des Spannkolbens angeordnet ist. Durch die senkrecht auf der Ventilschieberlängsachse wirkende Schwingungsamplitude treten keine Massenträgheitskräfte des Ventilschiebers in Erscheinung, da aufgrund der Anordnung die Massenträgheitskräfte des Ventilschiebers nicht in der Ventilschieberlängsachse wirken.

Vorteilhafterweise ist der Ventilschieber im Ventilschieberraum mittels einer Passung und/oder mittels eines Dichtelementes abgedichtet. Besonders vorteilhaft ist eine Spielpassung, mittels der der Ventilschieber innerhalb des Ventilschieberraums eingepasst ist. Ein geringer Leckagestrom des hydraulischen Fluids zwischen dem Ventilschieber und der Führung im Ventilschieberraum kann als hinnehmbar angesehen werden, da durch die Fluidzufuhröffnung in den Spannerhochdruckraum ein permanenter Nachstrom des hydraulischen Fluides erfolgt. Eine noch weiter verbesserte Ausführung der Anordnung des Ventilschiebers innerhalb des Ventilschieberraums mit einem bewussten Leckagestrom kann die erforderliche Leckage zwischen dem Spannkolben und dem Gehäuse, wie es bisherige Ausführungen von Zugmittelspannern vorsehen, ersetzen. Damit ist die fertigungstechnisch sehr aufwendige geometrische Ausgestaltung des Übergangs zwischen dem Gehäuse und dem Spannkolben zur Ausgestaltung eines bewussten Leckagestroms nicht weiter erforderlich, da sich der Leckagestrom innerhalb des Druckbegrenzungsventils ausbilden kann.
Der Zugmittelspanner leitet die Spannkraft in das Zugmittel über einen Spannbügel ein, wobei das Druckbegrenzungsventil innerhalb des Spannkolbens an der an den Spannbügel angrenzenden Endseite des Spannkolbens angeordnet ist. Insbesondere kann vorgesehen sein, dass die Abblasöffnung zur Entlassung des hydraulischen Fluids aus dem Spannhochdruckraum in Richtung des Spannbügels weist, wobei eine Weiterleitung des entwichenen hydraulischen Fluids in bzw. durch den Spannbügel erfolgen kann.

Der erfindungsgemäße Zugmittelspanner kann mit einer im Spannerhochdruckraum angeordneten Spannfeder ausgeführt sein, so dass die Spannfeder zwischen dem Gehäuse und dem Spannkolben wirkt, wobei sich die Spannfeder zumindest teilweise in den Spannkolben hinein erstreckt. Die Vorspannung des Spannkolbens gegen das Zugmittel erfolgt daher zunächst mittels der Spannfeder. Die Spannfeder bewirkt die eigentliche Aufbringung der Spannkraft in das Zugmittel, wobei das hydraulische Fluid vorzugsweise zur Dämpfung angewendet wird.

Gemäß einer weiteren vorteilhaften Ausführungsform der Erfindung ist vorgesehen, dass das Druckbegrenzungsventil eine Einstellfeder umfasst, die den Ventilschieber in Richtung der Öffnungsstellung kraftbeaufschlagt, wobei die Höhe der Kraftbeaufschlagung durch eine Einstellbarkeit an bzw. mit der Einstellfeder verändert werden kann. Die Einstellfeder wirkt entgegen der Ventilfeder, so dass der Ventilschieber innerhalb des Druckbegrenzungsventils nicht lediglich eine monostabile Anordnung aufweist. Die Einstellfeder kann vorzugsweise manuell oder mittels eines hydraulischen Fluids in der Vorspannung einstellbar sein, so dass in Abhängigkeit des gewünschten maximalen Fluiddrucks innerhalb des Spannerhochdruckraums das Druckbegrenzungsventil entweder bei niedrigeren Fluiddrücken oder erst bei höheren Fluiddrücken eine fluidische Verbindung zwischen der Hochdruckeingangsöffnung und der Abblasöffnung freigibt, um das hydraulische Fluid bei Erreichen des Grenzdrucks aus dem Spannerhochdruckraum abzublasen.
Gemäß einer weiteren vorteilhaften Ausführungsform der Anordnung des Druckbegrenzungsventils innerhalb des Spannkolbens ist die Ventilbaugruppe nach Art des Druckbegrenzungsventils als Einschraubeinheit endseitig in den Spannkolben einschraubbar ausgeführt und/oder in diesen eingepresst. Alternativ zu einer einschraubbaren Ausführung kann die Einschraubeinheit auch innerhalb des Spannkolbens mittels eines Sprengringes oder ähnlichem fixiert werden. Die Einschraubeinheit umfasst insgesamt eine zylinderförmige Bauweise, wobei die erste Zylinderplanfläche in Richtung des Spannerhochdruckraums weist, und die zweite Zylinderplanfläche die Druckfläche des Spannkolbens beispielsweise gegen den Spannbügel bildet. Die geometrische Ausgestaltung des Spannkolbens insbesondere zur Aufnahme der Spannfeder kann auf verschiedene Weise erfolgen. Beispielsweise kann der Spannkolben derart ausgeführt sein, dass die Spannfeder unmittelbar an die Einschraubeinheit angrenzt. Damit ist der Spannkolben insgesamt hohlzylinderartig ausgebildet, so dass der Spannerhochdruckraum unmittelbar an die Einschraubeinheit angrenzt.

Weitere, die Erfindung verbessernde Maßnahmen werden nun nachstehend gemeinsam mit der Beschreibung eines bevorzugten Ausführungsbeispiels der Erfindung anhand der Figuren näher dargestellt. Es zeigen:
- Figur 1a, 1 b: die Anordnung eines Zugmittelspanners gemäß der vorliegenden Erfindung, wobei die Figur 1a die Einheit des Zugmittelspanners in der Anordnung des gesamten Zugmitteltriebes aus Figur 1 b in vergrößerter Form darstellt;
- Figur 2a: eine Ansicht des Druckbegrenzungsventils innerhalb des Spannkolbens in einer Schließstellung,
- Figur 2b: eine Ansicht des Druckbegrenzungsventils innerhalb des Spannkolbens in einer Öffnungsstellung;
- Figur 3a: eine weitere Ausführungsform des Druckbegrenzungsventils mit einer Einstellfeder in einer Schließstellung, und
- Figur 3b: die Ausführungsform eines Druckbegrenzungsventils innerhalb eines Spannkolbens mit einer Einstellfeder in einer Öffnungsstellung.

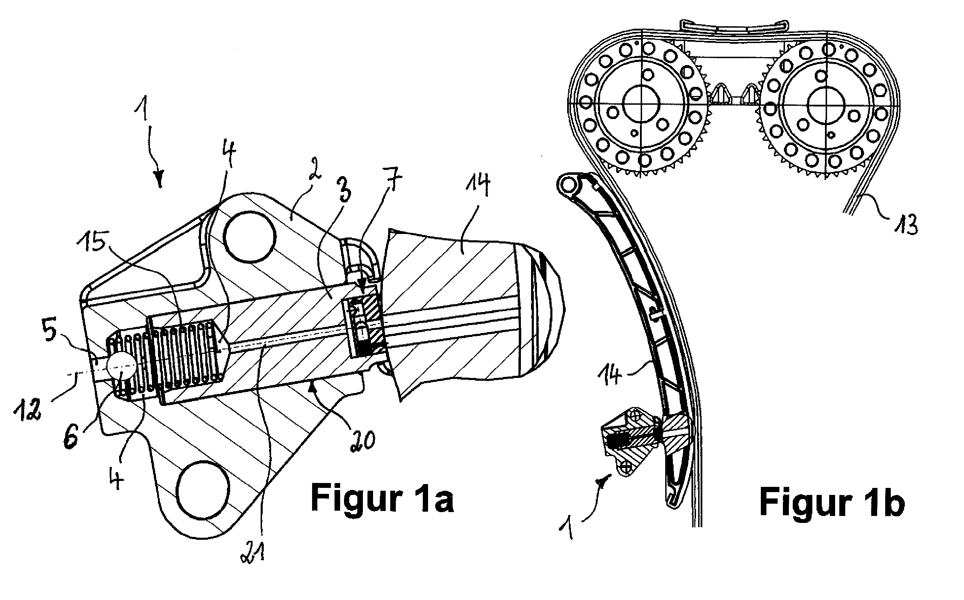

Der Zugmittelspanner gemäß der vorliegenden Erfindung ist in Figur 1a in vergrößerter Form dargestellt und mit dem Bezugszeichen 1 versehen. Eine Anordnung des Zugmittelspanners 1 im Gesamtsystem des Zugmitteltriebes gibt Figur 1b wieder, wobei das Zugmittel 13 mittels eines Spannbügels 14 vorgespannt wird, und der Zugmittelspanner 1 gegen den Spannbügel 14 wirkt. Der Zugmittelspanner 1 in Figur 1a ist im Querschnitt dargestellt, wobei der Zugmittelspanner 1 zunächst ein Gehäuse 2 umfasst, in dem ein Spannkolben 3 längsbeweglich entlang einer Spannkolbenlängsachse 12 aufgenommen ist. Eine Spannfeder 15 ist zwischen einem hinteren Ende des Gehäuses 2 und dem Spannkolben 3 angeordnet und beaufschlagt den Spannkolben 3 mit einer Druckkraft, so dass dieser in Richtung des Spannbügels 14 gedrückt wird. Ferner umfasst das Gehäuse 2 angrenzend an den Spannkolben 3 einen Spannerhochdruckraum 4, welcher über eine Fluidzufuhröffnung 5 und ein Rückschlagventil 6 mit einem hydraulischen Fluid beaufschlagt wird. Das Rückschlagventil 6 umfasst einen Ventilkörper, welcher als Kugel schematisch dargestellt ist, und die gegen die Fluidzufuhröffnung 5 abdichtet. Strömt nunmehr das hydraulische Fluid aus der Fluidzufuhröffnung 5 in den Spannerhochdruckraum 4 hinein, so verhindert das Ventilelement des Rückschlagventils 6 ein Rückströmen des hydraulischen Fluids. Somit steht der Spannerhochdruckraum 4 permanent unter einer Druckbeaufschlagung, und drückt den Spannkolben 3 gegen den Spannbügel 14. Zum Entweichen des hydraulischen Fluids aus dem Spannerhochdruckraum 4 ist ein Leckagespalt 20 vorgesehen, durch den das hydraulische Fluid in entsprechend geringen Mengen entweichen kann.

Erfindungsgemäß ist innerhalb des Spannkolbens 3 auf der dem Spannbügel 14 zugewandten Endseite ein Druckbegrenzungsventil 7 angeordnet. Das Druckbegrenzungsventil 7 ist über einen Fluidkanal 21 mit dem Spannerhochdruckraum 4 verbunden. Nimmt der Fluiddruck innerhalb des Spannerhochdruckraums 4 einen kritischen Wert an, so öffnet das Druckbegrenzungsventil 7, und das hydraulische Fluid kann durch den Fluidkanal 21 das Druckbegrenzungsventil 7 passieren und aus dem Spannerhochdruckraum 4 entweichen. Damit ist sichergestellt, dass der Fluiddruck innerhalb des Spannerhochdruckraums 4 keine überkritischen Werte annehmen kann, so dass das Zugmittel 13 nicht aufgrund einer zu starken Vorspannkraft über den Spannbügel 14 überlastet werden kann.

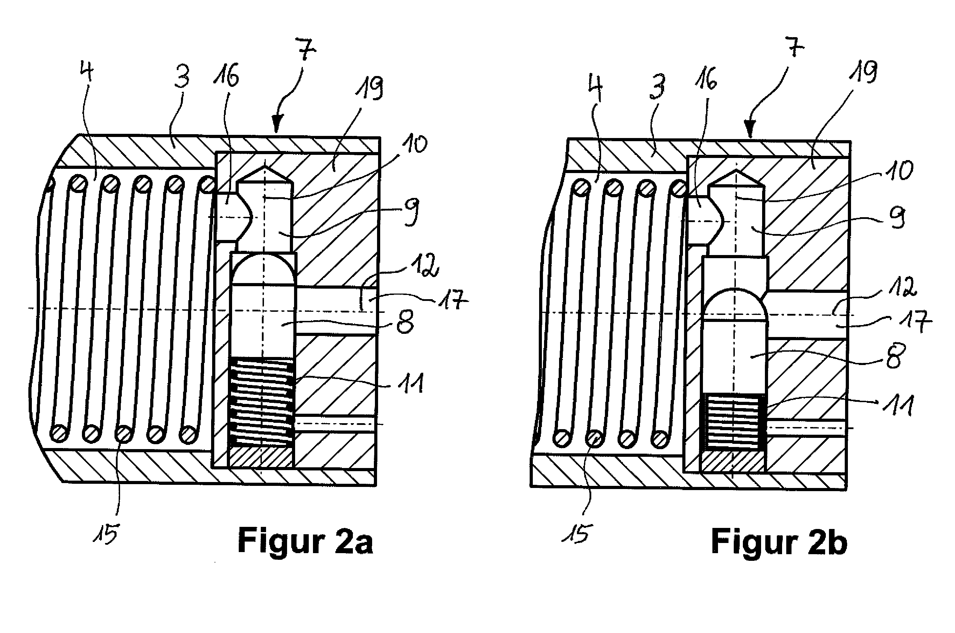

In den Figuren 2a und 2b ist das Druckbegrenzungsventil 7 in einer vergrößerten Darstellung gezeigt. Dieses befindet sich innerhalb des Spannkolbens 3, wobei das Druckbegrenzungsventil 7 in Form einer Einschraubeinheit 19 in der an den Spannbügel angrenzenden Endseite des Spannkolbens 3 eingebracht ist. Gemäß der hier gezeigten Ausführung grenzt die Spannfeder 15 direkt an die das Druckbegrenzungsventil 7 bildende Einschraubeinheit 19 an. Innenseitig bildet damit die Einschraubeinheit 19 die Begrenzung des Spannerhochdruckraums 4, wobei die Einschraubeinheit 19 außenseitig an den Spannbügel angrenzt.

Das Druckbegrenzungsventil 7 umfasst einen Ventilschieber 8, der axialbeweglich innerhalb eines Ventilschieberraums 9 aufgenommen ist. Über eine Hochdruckeingangsöffnung 16 wird der Ventilschieberraum 9 mit dem fluidischen Druck aus dem Spannerhochdruckraum 4 beaufschlagt, wobei eine Ventilfeder 11 den Ventilschieber 8 in eine Schließstellung drückt. In der Figur 2a ist das Druckbegrenzungsventil 7 in einer geschlossenen Stellung dargestellt, wobei die Figur 2b das Druckbegrenzungsventil 7 in einer Öffnungsstellung zeigt. Somit ist erkennbar, das in Figur 2b der Ventilschieber 8 innerhalb des Ventilschieberraums 9 in einer Öffnungsstellung die Hochdruckeingangsöffnung 16 mit einer Abblasöffnung 17 freigibt, so dass das hydraulische Fluid aus dem Spannerhochdruckraum 4 innerhalb des Spannkolbens 3 durch die Hochdruckeingangsöffnung 16 und den Ventilschieberraum 9 zur Abblasöffnung 17 gelangen kann. Der Ventilschieber 8 ist längsbeweglich in einer Ventilschieberlängsachse 10 angeordnet, welche senkrecht auf der Spannkolbenlängsachse 12 steht. Somit ist sichergestellt, dass Schwingungsbewegungen innerhalb des Spannkolbens 3, welche sich entlang der Spannkolbenlängsachse 12 ausbilden, nicht direkt auf den Ventilschieber 8 wirken. Der Grund der Schwingungsunempfindlichkeit des Ventilschiebers 8 ist darin begründet, dass die Schwingungsrichtung senkrecht auf der Bewegungsrichtung entlang der Ventilschieberlängsachse 10 des Ventilschiebers 8 wirken. Somit treten keine Massenträgheitskräfte des Ventilschiebers 8 in Erscheinung, und das Druckbegrenzungsventil 7 kann unbeeinflusst von der dynamischen Belastung arbeiten.

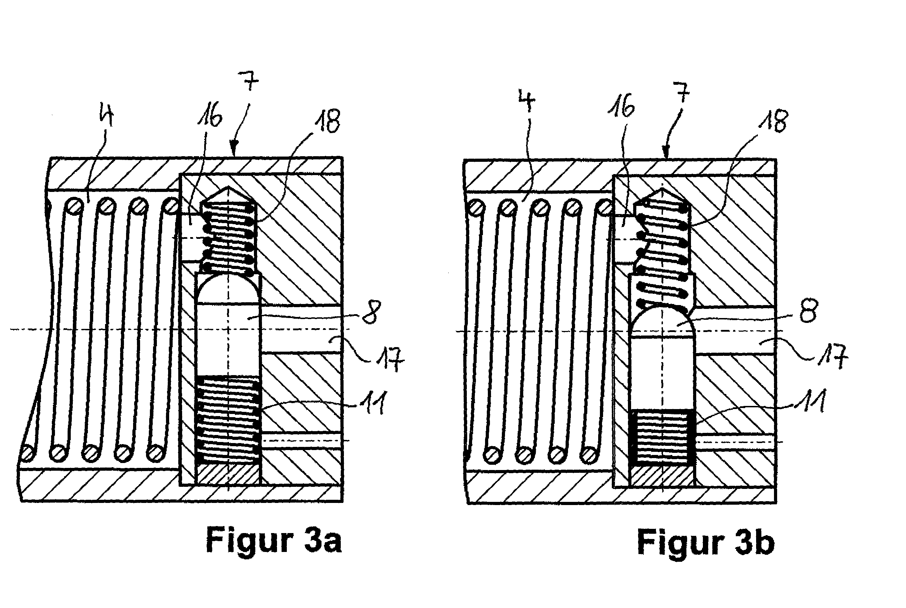

In den Figuren 3a und 3b ist ein weiteres Ausführungsbeispiel des Druckbegrenzungsventils 7 dargestellt. Hierin ist angrenzend an den Ventilschieber 8 eine Einstellfeder 18 gezeigt, wobei in Figur 3a das Druckbegrenzungsventil in einer Schließstellung und in Figur 3b in einer Öffnungsstellung dargestellt ist. Mittels der Einstellfeder 18 besteht die Möglichkeit, den maximal zulässigen Fluiddruck aus dem Spannerhochdruckraum 4 einzustellen, bei dem der Ventilschieber 8 in eine Öffnungsstellung überführt wird. Die als Druckfeder ausgebildete Einstellfeder 18 unterstützt dabei die Überführung des Ventilschiebers 8 in eine Öffnungsstellung, so dass das Druckbegrenzungsventil 7 nicht lediglich als ein monostabiles Ventil ausgeführt ist. Entspannt sich die Einstellfeder 18, so wird die Ventilfeder 11 komprimiert, wobei bei einer Entspannung der Ventilfeder 11 hingegen die Einstellfeder 18 komprimiert wird. Damit wirken die beiden Federn 11 und 18 in jeweils entgegengesetzte Richtungen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Der Ventilschieber 8 ist gemäß der vorliegenden Ausführungsbeispiele als ein zylinderförmiger Ventilschieber mit einer entsprechend kugelförmig geformten Endseite dargestellt. Es besteht jedoch auch die Möglichkeit, den Ventilschieber 8 als ein Kugelelement oder ähnlichem auszuführen, welches eine gleiche oder zumindest ähnliche Wirkung zur Bildung einer Schließ- bzw. Öffnungsstellung ausführen kann. Ferner sind die Federn, umfassend die Ventilfeder 11 sowie die Einstellfeder 18, nicht auf die Ausführung einer Spiralfeder begrenzt. Es besteht ferner die Möglichkeit, anderes geartete Federelemente einzusetzen, welche beispielsweise Tellerfedern, Blattfedern oder sonstige elastische Elemente umfassen können. Auch die Anordnung des Druckbegrenzungsventils 7 innerhalb der an den Spannbügel 14 angrenzenden Endseite des Spannkolbens ist nicht als Eingrenzung des vorliegenden Schutzumfanges zu verstehen. Das Druckbegrenzungsventil 7 kann ebenfalls innerhalb des Gehäuses 2 des Zugmittelspanners 1 angeordnet werden, so lange der Spannerhochdruckraum 4 über das Druckbegrenzungsventil 7 druckentlüftet werden kann.

### Bezugszeichen liste

- 1: Zugmittelspanner
- 2: Gehäuse
- 3: Spannkolben
- 4: Spannerhochdruckraum
- 5: Fluidzufuhröffnung
- 6: Rückschlagventil
- 7: Druckbegrenzungsventil
- 8: Ventilschieber
- 9: Ventilschieberraum
- 10: Ventilschieberlängsachse
- 11: Ventilfeder
- 12: Spannkolbenlängsachse
- 13: Zugmittel
- 14: Spannbügel
- 15: Spannfeder
- 16: Hochdruckeingangsöffnung
- 17: Abblasöffnung
- 18: Einstellfeder
- 19: Einschraubeinheit
- 20: Leckagespalt
- 21: Fluidkanal

## Patentansprüche

1. Zugmittelspanner (1), insbesondere nach Art eines hydraulischen Zugmittelspanners für einen Kettentrieb, mit einem Gehäuse (2), das einen Spannkolben (3) axialbeweglich aufnimmt, welcher an einen Spannerhockdruckraum (4) angrenzt, wobei der Spannerhockdruckraum (4) über eine Fluidzufuhröffnung (5) sowie ein Rückschlagventil (6) gespeist ist, **dadurch gekennzeichnet, dass** der Zugmittelspanner (1) eine Ventilbaugruppe umfasst, welche nach Art eines Druckbegrenzungsventils (7) ausgebildet ist und den sich im Spannerhochdruckraum (4) einstellenden Fluiddruck begrenzt.

2. Zugmittelspanner (1) nach Anspruch 1, **dadurch gekennzeichnet, dass** das Druckbegrenzungsventil (7) im Spannkolben (3) angeordnet ist.

3. Zugmittelspanner (1) nach Anspruch 1 oder 2, **dadurch gekennzeichnet, dass** das Druckbegrenzungsventil (7) einen Ventilschieber (8) umfasst, der in einem Ventilschieberraum (9) in Richtung einer Vetilschieberlängsachse (10) geführt ist und mittels einer Ventilfeder (11) in eine Schließstellung bringbar ist.

4. Zugmittelspanner (1) nach Anspruch 3, **dadurch gekennzeichnet, dass** der Spannkolben (3) entlang einer Spannkolbenlängsachse (12) bewegbar ist, wobei die Ventilschieberlängsachse (10) und die Spannkolbenlängsachse (12) einen Winkel von 60° bis 120°, bevorzugt von 75° bis 105° und besonders bevorzugt von 90° zueinander einschließen.

5. Zugmittelspanner (1) nach einem der Ansprüche 3 bis 4, **dadurch gekennzeichnet, dass** der Ventilschieber (8) im Ventilschieberraum (9) mittels einer Passung und/oder mittels eines Dichtelementes abgedichtet ist.

6. Zugmittelspanner (1) nach einem der vorgenannten Ansprüche, **dadurch gekennzeichnet, dass** der Zugmittelspanner (1) die Spannkraft in das Zugmittel (13) über einen Spannbügel (14) einleitet, und das Druckbegrenzungsventil (7) im Spannkolben (3) an der an den Spannbügel (14) angrenzenden Endseite des Spannkolbens (3) angeordnet ist.

7. Zugmittelspanner (1) nach einem der vorgenannten Ansprüche, **dadurch gekennzeichnet, dass** der Spannkolben (3) mittels einer im Spannerhochdruckraum (4) angeordneten Spannfeder (15) gegen das Zugmittel (13) vorgespannt ist.

8. Zugmittelspanner (1) nach einem der vorgenannten Ansprüche, **dadurch gekennzeichnet, dass** das Druckbegrenzungsventil (7) eine Hochdruckeingangsöffnung (16) und eine Ablassöffnung (17) umfasst, wobei die Hochdruckeingangsöffnung (16) mit dem Spannerhochdruckraum (4) verbunden ist und der Ventilschieber (8) in der Öffnungsstellung eine Verbindung zwischen der Hochdruckeingangsöffnung (16) und der Ablassöffnung (17) freigibt.

9. Zugmittelspanner (1) nach einem der Ansprüche 3 bis 8, **dadurch gekennzeichnet, dass** das Druckbegrenzungsventil (7) eine Einstellfeder (18) umfasst, die den Ventilschieber (8) in Richtung der Öffnungsstellung krafbeaufschlagt, wobei die Höhe der Kraftbeaufschlagung einstellbar ist.

10. Zugmittelspanner (1) nach einem der vorgenannten Ansprüche, **dadurch gekennzeichnet, dass** die Ventilbaugruppe nach Art des Druckbegrenzungsventils (7) als Einschraubeinheit (19) endseitig in den Spannkolben (3) einschraubbar ausgeführt und/oder in diesen eingepresst ist.
